# EUROPEAN PATENT SPECIFICATION

(11) **EP 0 831 414 B1**
(45) Date of publication and mention of the grant of the patent: **23.04.2003**
(21) Application number: 97250281.9
(22) Date of filing: 18.09.1997
(51) Int. Cl.: G06K 7/00

(54) **A portable radio terminal**
Tragbares Funk-Endgerät
Terminal radio portable

(30) Priority: 19.09.1996 JP 24821396
(43) Date of publication of application: 25.03.1998
(73) Proprietor: NEC CORPORATION, Tokyo (JP)
(72) Inventor: Kobayashi, Makio, Kakegawa-shi, Shizuoka (JP)
(74) Representative: Patentanwälte Wenzel & Kalkoff

(56) References cited:
- EP-A- 0 586 170
- US-A- 5 479 172

## Description

The present invention relates to a portable radio terminal, and more particularly to a non-real-time transmission portable radio terminal having means for saving power consumption.

EP-A-0 586 170 discloses a mobile phone having a battery saving mode activated by the user. When this mode is activated and no network is detected, at least the transmitter of the phone Is switched off for a prescribed period of time or for a variable period of time, after which period the phone scans frequencies in which the network can be found and if possible connection to the network is re-established. In addition, by pressing any key on the phone, the user can temporarily exit the battery saving state.

As another prior example of means for saving power consumption of a portable radio terminal, there is an apparatus disclosed in a Japanese patent application laid open as a Provisional Publication No. 148920/'90.

In the portable terminal of the prior art, transmission power is restricted when receiving field intensity is strong for saving the power consumption by reducing power supply to the transmission unit. The strong receiving field intensity means that there is a base station nearby, and consequently the base station can receive the signals transmitted from the portable radio terminal with a sufficient reliability even when the transmission power is restricted.

Although this disclosure concerns an apparatus applied in a real-time transmission portable radio communication system, it is applicable to a non-real-time transmission portable radio terminal for saving the power consumption by reducing power supply to the transmission unit.

However, there is still left a following problem in the prior art when applied in the non-real-time transmission portable radio terminal.

When the receiving field intensity is weak, that is, when the base station is distant, a high transmission power, and accordingly a large power supply to the transmission unit is required. Therefore, when the transmission power level is set to be sufficient for distant communication, it results in insufficient power saving even when the power supply is reduced only for nearby communication. On the other hand, when the transmission power level is set low, the transmission quality becomes insufficient for distant communication.

Therefore, a primary object of the invention is to provide a portable radio terminal wherein the power consumption is sufficiently economized without impairing the transmission quality.

In order to achieve the object, a portable radio terminal of the invention comprises:
a field intensity detector for detecting a receiving field intensity;
a transmission unit for transmitting radio signals to a base station;
a switch for supplying or cutting a power supply to the transmission unit;
a memory for storing signals to be transmitted to the base station; and
a control unit for controlling, said swith to cut the power supply to the transmission unit when the receiving field intensity becomes lower than a first threshold value and to supply the power supply to the transmission unit when the receiving field intensity is higher than a second threshold value, said control unit further controlling the memory to store the signals to be transmitted during a time interval when the power supply is cut, and said control unit further controlling the transmission unit to transmit the signals stored in the memory when the power supply is supplied to the transmission unit.

Therefore, in the invention, the ordinary transmission can be restricted to a small level sufficient for communicating with the base station in a short distance, enabling efficiently saving the power consumption in the transmission unit.

In the foregoing, further objects, features, and advantages of this invention will become apparent from a consideration of the following description, the appended claims, and the accompanying drawings wherein the same numerals indicate the same or the corresponding parts.

In the drawings:
FIG. 1 is a block diagram illustrating a portable radio terminal according to an embodiment of the invention;
FIG. 2 is a flowchart illustrating control flow performed in the control unit 4 of FIG. 1 in a normal mode; and
FIG. 3 is a flowchart illustrating control flow performed in the control unit 4 of FIG. 1 in a power economy mode;

Now, embodiments of the present invention will be described in connection with the drawings.

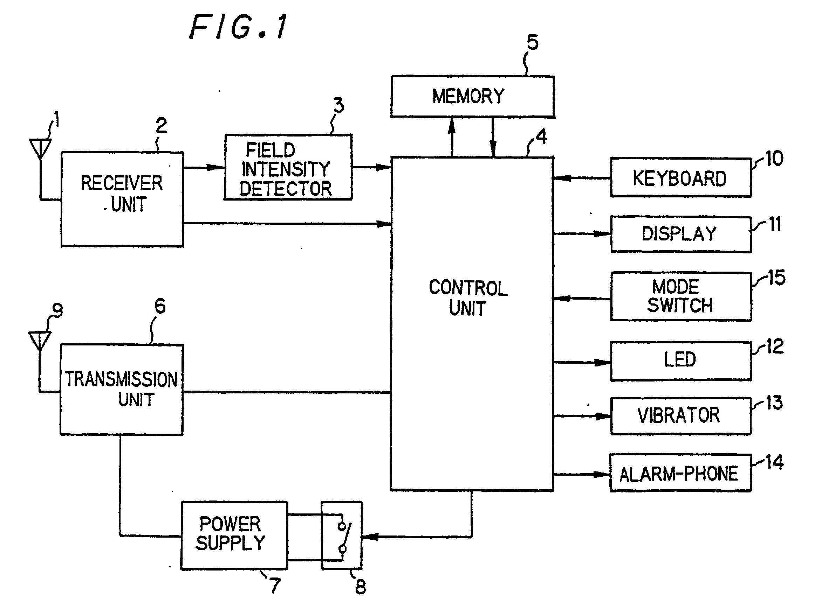

FIG. 1 is a block diagram illustrating a portable radio terminal according to an embodiment of the invention.

Referring to FIG. 1, transmitted radio signals from a base station (not shown in the drawings) are received by a receiving antenna 1 and supplied to a receiver unit 2. The receiver unit 2 is a device for amplifying and demodulating the received signals, and for delivering the demodulated signals to a control unit 4. Received signals amplified by the receiver unit 2 are delivered to a field intensity detector 3. The field intensity detector 3 is a device for detecting the receiving field intensity RSSI to be supplied also to the control unit 4 referring to the received signals.

The control programs for controlling the portable radio terminal are stored in a memory 5. The memory 5 is also used for storing control information generated along with various operations of the portable radio terminal, and for temporarily storing the signals to be transmitted to the base station.

The transmission unit 6 is a device for modulating and amplifying the transmission signals to be transmitted to the base station through a transmitting antenna 9. The transmission unit 6 is made active with a current supplied from a power supply 7 having a switch 8 for on-off controlling the current supply to the transmission unit 6.

A keyboard 10 is an input device provided for a user to input control information, commands, messages to be transmitted and so on.

An LED (Light Emitting Diode) 12, a vibrator 13 and an alarm-phone 14 are provided for notifying an occurrence of events such as a new message reception.

A mode switch 15 is used to give a command to the control unit 4 to control the portable radio terminal to operate in a power economy mode, which is a characteristic feature of the invention.

The control unit 4 is a control center of the portable radio terminal, and electrical circuits in the control unit 4 control operations of the aforementioned parts according to programs stored in the memory 5. The main operations controlled by the control unit 4 are as follows;
a. Processing the demodulated signals supplied from the receiver unit 2 for driving the LED 12, the vibrator 13, or the alarm-phone 14 according thereto for notifying an occurrence of events such as a new message reception,
b. Storing messages included in the demodulated signals supplied from the receiver unit 2 in the memory 5, and displaying necessary information on a display 11,
c. Receiving messages input through the keyboard 10, storing the messages in the memory 5 when necessary, and transmitting the messages to the base station through the transmission unit 6, and
d. Controlling operational mode of the portable radio terminal, to operate in the power economy mode, for example.

More particularly, the above operation of controlling the operational mode includes following processes;
(1) Selecting the power economy mode in response to an operation of the mode switch 15,
(2) Storing threshold values V1 and V2 in the memory 5, the threshold values V1 and V2 being input through the keyboard 10 and used in the control of the operational mode,
(3) Comparing the receiving field intensity RSSI with the threshold values V1 and V2, and controlling the on-off of the switch 8 according to the result of the comparison, and
(4) Storing, in the memory 5, suspended transmission signals, which mean transmission signals prepared in an interval when the switch 8 is controlled to off-state and not yet transmitted, and transmitting the suspended transmission signals stored in the memory 5 when the switch 8 is controlled to on-state through the transmission unit 6.

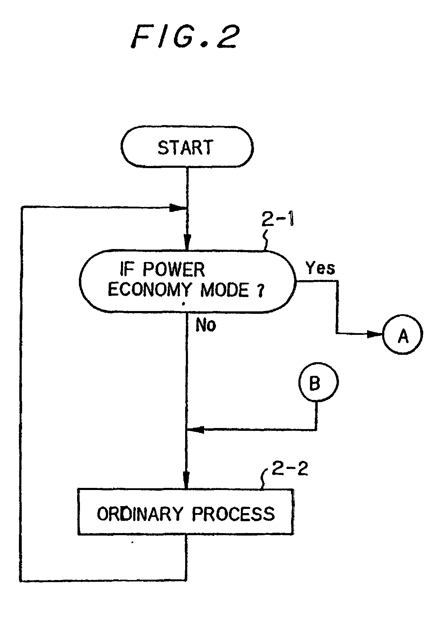

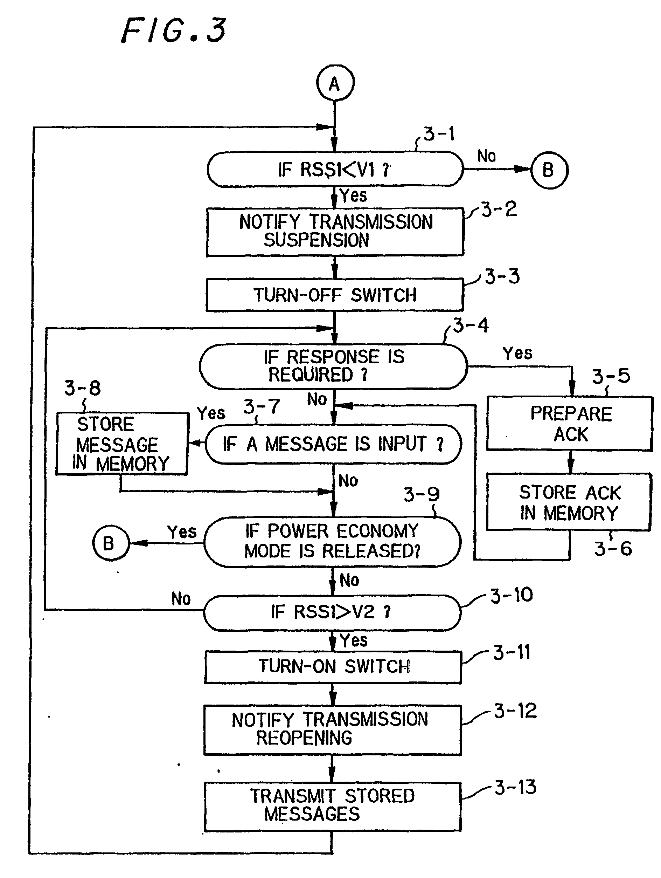

Now, detailed operation of the embodiment is described referring to flowcharts of FIGs. 2 and 3 illustrating control flow performed in the control unit 4.

When there is prepared a transmission signal, the control unit 4 checks first (at step 2-1 of FIG. 2) whether the power economy mode is selected or not by the mode switch 15. When the power economy mode is selected, the control flow goes to control steps corresponding to the power economy mode shown in FIG. 3.

Otherwise, the transmission signal is treated in an ordinary process (at step 2-2) and the control unit 4 awaits another transmission signal returning to step 2-1.

Here, the ordinary process (at step 2-2) means operations in a normal mode, wherein the transmission and reception of signals are executed irrespective of the receiving field intensity RSSI and transmission signals, if there are any, are transmitted through the transmission unit 6 at once in real-time.

Now, referring to FIG. 3, in the control steps of the power economy mode, the control unit 4 compares (at step 3-1) the receiving field intensity RSSI supplied from the field intensity detector 3 with the threshold value V1 registered in the memory 5. When the receiving field intensity RSSI is stronger than the threshold value V1, the control flow returns to the ordinary process (at step 2-2 of FIG. 2).

On the other hand, when the receiving field intensity RSSI is weaker than the threshold value V1, a report is sent to the base station notifying that the transmission from the portable radio terminal is to be suspended (at step 3-2), and the switch 8 is controlled to off-state (at step 3-3), cutting the current supply to the transmission unit 6.

Here, it is noted that the receiver unit 2 remains to operate normally even when the switch 8 is controlled to off-state for receiving signals transmitted from the base station.

Therefore, when there is a signal received by the receiver unit 2, the control unit 4 checks whether the received signal includes a response requirement or not (at step 3-4). When the response requirement is included, the control unit 4 prepares an acknowledgment signal ACK (at step 3-5), by reading out from the memory 5 or by receiving information through the keyboard 10, which is stored in the memory 5 (at step 3-6). When there is a transmission message input through the keyboard 10, it is detected by the control unit 4 (at step 3-7) and stored in the memory 5 in the same way (at step 3-8).

Performing steps 3-4 to 3-7, the control unit 4 checks if the power economy mode is released by the mode switch 15 (at step 3-9). When the power economy mode is released, the control flow returns to the ordinary process (at step 2-2 of FIG. 2). When the power economy mode is not released, the control unit 4 compares the receiving field intensity RSSI at that time with the threshold value V2 registered in the memory 5 (at step 3-10).

When the receiving field intensity RSSI is weaker than the threshold value V2, the control flow returns to step 3-4 for repeating steps 3-4 to 3-10. Thus, any acknowledgment signal ACK required from the base station or transmission messages input for transmitting to the base station during the interval when the switch 8 is at off-state are safely stored in the memory 5.

When the receiving field intensity RSSI is found stronger than the threshold value V2 at step 3-10, the control unit 4 controls the switch 8 to on-state for reopening current supply from the power supply 7 to the transmission unit 6 (at step 3-11), and sends a report (at step 3-12) notifying reopening of the signal transmission. Then, all the ACK signals and the transmission messages stored in the memory 5 in the steps 3-6 and 3-8 are transmitted through the transmission unit 6 (at step 3-13). After sending the stored messages, the control flow returns to step 3-1 for comparing the receiving field intensity RSSI with the threshold value V1, and the operation in the power economy mode is continued.

In general, when a distance between a portable radio terminal and a base station is long, the receiving field intensity is weak, and it is strong when the distance is short.

In the the embodiment, the switch 8 is controlled to off-state for cutting the current supply from the power supply 7 to the transmission unit 6 when the receiving field intensity RSSI is weak, that is, when the distance between the portable radio terminal and the base station is long, suspending the signal transmission from the portable radio terminal, which is reopened only when the receiving field intensity RSSI becomes stronger than the threshold value V2, that is, when there is a base station nearby.

Therefore, the ordinary transmission power can be restricted in a small level sufficient for communicating with a base station at a short distance, in the embodiment, enabling efficiently saving the power consumption in the transmission unit 6.

Further, the portable radio terminal of the embodiment has a convenience that the user can select the power economy mode by the mode switch 15 according to his own option. There is still another convenience for the user that the two threshold values V1 and V2 can be set at desired levels through the keyboard 10, allowing the user to set the power economy level according to his usage.

Still further, in the embodiment, the acknowledgment signal ACK and the transmission messages can be surely transmitted since they are safely stored in the memory 5 during a period when the switch 8 is controlled to off-state and the signal transmission is suspended, and they are transmitted read out from the memory 5 when the switch 8 is at on-state, that is, when the receiving field intensity is sufficiently strong.

As heretofore described, the transmission power can be restricted sufficiently in the embodiment without impairing the transmission quality, enabling effectively economizing the power consumption of the portable radio terminal.

## Claims

1. A portable radio terminal comprising:
a field intensity detector (3) for detecting a receiving field intensity;
a transmission unit (6) for transmitting radio signals to a base station;
a switch (8) for supplying or cutting a power supply to said transmission unit (6);
a memory (5) for storing signals to be transmitted to the base station; and
a control unit (4) for controlling said switch (8) to cut said power supply to said transmission unit (6) when said receiving field intensity becomes lower than a first threshold valuer (V₁) and to supply said power supply to said transmission unit (6) when said receiving field intensity is higher than a second threshold value (V₂), said control unit further controlling said memory (5) to store said signals to be transmitted during a time interval when said power supply is cut, and said control unit further controlling said transmission unit (6) to transmit said signals stored in said memory (5) when said power supply is supplied to said transmission unit (6).

2. A portable radio terminal recited in claim 1 comprising:
means (15) for setting the portable radio terminal to operate in a power economy mode
said control unit (4) controlling said switch (8), said memory (5) and said transmission unit (6), when the portable radio terminal is set to operate in said power economy mode.

3. The portable radio terminal recited in claim 1 or 2, further comprising an input device (10) for setting levels of said first threshold value (V₁) and said second threshold value (V₂) from outside.

## Patentansprüche

1. Ein tragbares Funk-Endgerät umfassend:
einen Feldstärkedetektor (3) zum Erfassen der Stärke eines Empfangsfeldes;
eine Sendeeinheit (6) zur Übertragung von Funksignalen an eine Basisstation;
einen Schalter (8) zum Einfuhren oder Abschalten einer Strom- bzw. Energieversorgung für die Sendeeinheit (6);
einen Speicher (5) zum Speichern von an die Basisstation zu sendenden Signalen; und
eine Steuereinheit (4) zum Steuern des Schalters (8) zum Abschalten der Stromversorgung für die Sendeeinheit (6), wenn die Intensität des Empfangsfeldes niedriger als ein erster Schwellenwert (V₁) wird, und zum Einschalten der Stromversorgung für die Sendeeinheit (6), wenn die Intensität des Empfangsfeldes höher als ein zweiter Schwellenwert (V₂) ist, wobei die Steuereinheit weiter den Speicher (5) zum Speichern der zu sendenden Signale während eines Zeitraumes steuert, wenn die Stromversorgung abgeschaltet ist, und wobei die Steuereinheit weiter die Sendeeinheit (6) zum Senden der in dem Speicher (5) gespeicherten Signale steuert, wenn die Stromversorgung für die Sendeeinheit (6) eingeschaltet ist.

2. Ein tragbares Funk-Endgerät nach Anspruch 1, umfassend:
Mittel (15) zum Setzen des tragbaren Radioendgeräts zum Betrieb in einem ökonomischen Leistungszustand;
wobei die Steuereinheit (4) den Schalter (8), den Speicher (5) und die Sendeeinheit (6) steuert, wenn das tragbare Funk-Endgerät zum Betrieb in dem ökonomischen Leistungszustand gesetzt ist.

3. Das tragbare Funk-Endgerät nach Anspruch 1 oder 2, weiter umfassend eine Eingabeeinrichtung (10) zum Setzen der Niveaus des ersten Schwellenwertes (V₁) und des zweiten Schwellenwertes (V₂) von außen her.

## Revendications

1. Terminal radio portable, comprenant :
un détecteur d'intensité de champ (3) pour détecter l'intensité d'un champ reçu ;
une unité d'émission (6) pour émettre des signaux radio vers une station de base ;
un commutateur (8) pour fournir ou interrompre une alimentation électrique de ladite unité d'émission (6) ;
une mémoire (5) pour stocker des signaux devant être émis vers la station de base ; et
une unité de commande (4) pour commander ledit commutateur (8) afin qu'il interrompe ladite alimentation électrique de ladite unité d'émission (6) lorsque ladite intensité du champ reçu devient inférieure à une première valeur de seuil (V₁) et pour fournir ladite alimentation électrique à ladite unité d'émission (6) lorsque ladite intensité du champ reçu est supérieure à une seconde valeur de seuil (V₂), ladite unité de commande commandant en outre ladite mémoire (5) afin de stocker lesdits signaux devant être émis pendant un intervalle de temps pendant lequel ladite alimentation électrique est interrompue, et ladite unité de commande commandant en outre ladite unité d'émission (6) afin d'émettre lesdits signaux stockés dans ladite mémoire (5) lorsque ladite alimentation électrique est fournie à ladite unité d'émission (6).

2. Terminal radio portable selon la revendication 1, comprenant :
des moyens (15) pour régler le terminal radio portable afin qu'il fonctionne dans un mode d'économie d'énergie,
ladite unité de commande (4) commandant ledit commutateur (8), ladite mémoire (5) et ladite unité d'émission (6) lorsque ledit terminal radio portable est réglé de façon à fonctionner dans ledit mode d'économie d'énergie.

3. Terminal radio portable selon la revendication 1 ou 2, comprenant en outre un dispositif d'entrée (10) pour régler de l'extérieur les niveaux de ladite première valeur de seuil (V₁) et de ladite seconde valeur de seuil (V₂).
